# EUROPEAN PATENT APPLICATION

(11) **EP 1 732 299 A1**
(43) Date of publication of application: **13.12.2006**
(21) Application number: 06010949.3
(22) Date of filing: 26.05.2006
(51) Int. Cl.: H04M 1/725, H04M 1/02

(54) **Method for changing the operation mode in a mobile terminal and mobile terminal for implementing the same**

(30) Priority: 07.06.2005 KR 20050048285
(71) Applicant: Samsung Electronics Co., Ltd., Yeongtong-gu Suwon-si, Gyeonggi-do (KR)
(72) Inventor: Kim, Hwan c/o Samsung Electronics Co. Ltd.,, Suwon-si, Gyeonggi-do (KR); Lim, Chae-Whan c/o Samsung Electronics Co. Ltd.,, Suwon-si, Gyeonggi-do (KR)
(74) Representative: Lang, Johannes

(57) **Abstract**

A method and terminal for changing the operation mode in a mobile terminal in order to automatically offer an upright display of image data are provided, where a rotating direction of a folder of the mobile terminal is detected, when the folder is rotated in the camera mode, and a determination is made as to whether a camera module is exposed, if the folder is rotated in a direction to enter at least one of a camera stop mode and video transmission stop mode. The camera stop mode is entered for terminating the camera mode, if the camera module is not exposed. The video transmission stop mode is changed, if the camera module is not exposed. The camera mode is maintained, if the camera module is exposed. Image data is then rotated in a direction and an angle corresponding to the rotation of the camera module and displaying the image data in an upright direction.

## Description

### BACKGROUND OF THE INVENTION

### 1. Field of the Invention

The present invention relates to a method for changing the operation mode in a mobile terminal and mobile terminal implementing the same. More particularly, the present invention relates to a method for changing the operation mode in a mobile terminal and a mobile terminal offering an automatic upright display of image data when a camera module is rotated, and controlling a camera mode and a video call mode according to the rotating direction of a folder of the mobile terminal and the exposure of the camera module.

### 2. Description of the Related Art

Mobile communication terminals are becoming more integrated than existing mobile telephones for voice communication in order to perform high-speed data transmission. IMT-2000 mobile communication network services enable high-speed data transmission as well as voice communication through mobile terminals. In other words, mobile terminals can process both packet data and image data in an IMT-2000 network. Mobile terminals equipped with a camera or a TV receiver can also display motion pictures. Mobile terminals with an embedded camera can take pictures and display them as still or motion pictures. Also, it is possible to send the pictures to another mobile terminal. A mobile terminal with a TV receiver can display received video or image signals.

Recently, mobile terminals having a swivel display unit that can be rotated in a direction providing a wider display (horizontal mode) have attained popularity. The terminals generally include a folder having a display unit and certain keys, a main housing having a plurality of keys and a camera module that can be rotated back and forth. The folder is rotatably connected to the main housing.

However, the camera module having a camera sensor may be hidden due to a structural limitation when the folder with the display unit is opened in a certain direction.

When the folder is rotated to a horizontal mode, the camera module is exposed and viewed by a user. However, when the folder is in an upright position (or a vertical mode), the camera module mounted in the main housing is hidden by the folder and cannot be viewed by the user. Particularly, when the camera lens is rotated toward the user, it is obstructed by the folder when in the upright position. The user has to rotate the camera module in order to take a picture. If a camera key is pressed while the camera lens is obstructed by the folder, a totally useless black image will be taken.

For example, when a still image is taken in the condition that the camera lens is obstructed by the folder, a totally black image is obtained. When a camcorder function is implemented in the same condition, only unnecessary black video image is recorded. Moreover, when a video telephone (VT) function is used in the same condition, a call partner receives a black image of the user. If the user does not recognize this problem, the unnecessary image of the user will be continuously sent to the call partner during a video call.

The camera sensor can be rotated in various directions to take a picture of the user or any other object. When rotated in a certain direction, the camera sensor produces an upside-down image due to its structural limitation. In this case, the user has to reverse the image again using a key.

Generally, a camera function can be implemented upon selection of a corresponding menu. In other words, users have to take several steps of selecting a camera mode menu in order to use the camera of a mobile terminal. Therefore, users may be inconvenienced when trying to urgently take a picture in critical circumstances.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method and device where the operation mode of a mobile terminal to a camera mode may be automatically changed according to the rotating direction of a folder and the current mode of the mobile terminal.

Another object of an exemplary embodiment of the present invention is to provide a method for changing the operation mode of a mobile terminal to automatically offer an upright display of image data according to the rotation of a camera module of the mobile terminal and a mobile terminal incorporating the same.

Still another object of an exemplary embodiment of the present invention is to provide a method for controlling a camera mode according to the rotating direction of a folder and the current mode of a mobile terminal, and a mobile terminal incorporating the same.

In accordance with one aspect of exemplary embodiments of the present invention for accomplishing the above objects, there is provided a method for changing the operation mode of a mobile terminal to a camera mode, and a mobile terminal, where a rotating direction of a folder of the mobile terminal is detected, when the folder is rotated, the current mode of the mobile terminal is determined, if the folder is rotated in such a direction to enter the camera mode, and the current mode is changed to the camera mode in the rotating direction of the folder, if the current mode is a mode allowing a change to the camera mode.

In accordance with another aspect of exemplary embodiments of the present invention, there is provided a method for controlling a camera mode in a mobile terminal, and a mobile terminal, where a rotating direction of a folder of the mobile terminal is detected, when the folder is rotated in the camera mode, a determination is made as to whether a camera module is exposed, if the folder is rotated in such a direction to enter a camera stop mode, the camera stop mode is entered for terminating the camera mode, if the camera module is not exposed, and the camera mode is maintained, if the camera module is exposed.

In accordance with still another aspect of exemplary embodiments of the present invention, there is provided a method for controlling a camera mode in a mobile terminal, and a mobile terminal, where a rotating direction of a folder of the mobile terminal is detected, when the folder is rotated in the camera mode, a determination is made as to whether a camera module is exposed, if the folder is rotated in such a direction to hide the camera module, a camera stop mode is entered to inform a user of impossibility of photographing, if the camera module is not exposed, the camera mode is entered, if the folder is rotated in such a direction to expose the camera module in the camera stop mode, and the camera mode is entered, when the camera module is rotated and exposed in the camera stop mode.

In accordance with still another aspect of exemplary embodiments of the present invention, there is provided a method for controlling a camera mode in a mobile terminal, and a mobile terminal, where the current mode of the mobile terminal is determined, when a folder of the mobile terminal is rotated in such a direction to enter the camera mode, the camera mode in the rotating direction of the folder is entered, if the current mode is a mode allowing a change to the camera mode, a rotating direction of the folder is detected, when the folder is rotated again in the camera mode, a determination is made as to whether a camera module is exposed, if the folder is rotated in such a direction to hide the camera module, the camera mode is maintained, if the camera module is exposed, a change is made to a camera stop mode, to inform a user of impossibility of photographing, if the camera module is not exposed, a change is made to the camera mode, if the folder is rotated in such a direction to expose the camera module in the camera stop mode, and the camera mode is entered, when the camera module is rotated and exposed in the camera stop mode.

In accordance with still another aspect of exemplary embodiments of the present invention, there is provided a method for controlling a video call mode in a mobile terminal, and a mobile terminal, where a rotating direction of a folder of the mobile terminal is detected, when the folder is rotated in the video call mode, a determination is made as to whether a camera module is exposed, if the folder is rotated in such a direction to enter a video transmission stop mode, and a change is made to the video transmission stop mode, if the camera module is not exposed. In accordance with still another aspect of exemplary embodiments of the present invention, there is provided a method for controlling a camera mode in a mobile terminal, and a mobile terminal, where a rotation of a camera module of the mobile terminal in the camera mode is detected, and image data is rotated in a direction and an angle corresponding to the rotation of the camera module and the image data is displayed in an upright direction.

In accordance with still another aspect of exemplary embodiments of the present invention, there is provided a method for controlling a video call mode in a mobile terminal, and a mobile terminal, where a rotating direction of a folder of the mobile terminal is detected, when the folder is rotated in the video call mode, a determination is made as to whether a camera module is exposed, if the folder is rotated in such a direction to hide the camera module, at least one change is made to a video transmission stop mode to inform a user of impossibility of sending video data and a video mute mode for stopping video transmission, if the camera module is not exposed, a change is made to the video call mode, allowing the video transmission when the folder is rotated in such a direction to enter a video transmission mode in the video transmission stop mode, and the video call mode is entered when the camera module is exposed in the video transmission stop mode.

### BRIEF DESCRIPTION OF THE DRAWINGS

The above and other objects, features and advantages of certain exemplary embodiments of the present invention will be more apparent from the following description taken in conjunction with the accompanying drawings, in which:
FIG. 1 is a block diagram of a mobile terminal in accordance with an exemplary embodiment of the present invention;
FIG. 2 is a flow chart showing a process for changing the operation mode of a mobile terminal from a camera mode to a camera stop mode according to the rotating direction of a folder and the exposure of a camera module in accordance with an exemplary embodiment of the present invention; and
FIG. 3 is a flow chart showing a process for changing the operation mode of a mobile terminal from a video call mode to a video transmission stop mode according to the rotating direction of a folder and the exposure of a camera module in accordance with an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and.

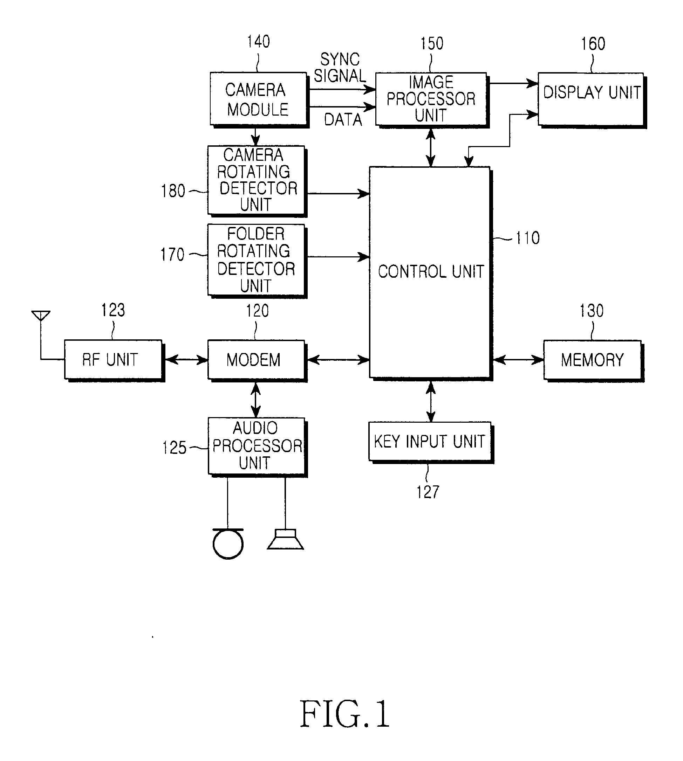

FIG. 1 is a block diagram of a mobile terminal in accordance with an exemplary embodiment of the present invention. The mobile terminal includes a video call function.

Referring to FIG. 1, an RF unit 123 performs a wireless communication function in the mobile terminal. The RF unit 123 includes an RF transmitter for performing upward conversion and amplification of the frequency of a transmitted signal and an RF receiver for amplifying a received signal with low noise and performing downward conversion of the frequency of the signal. A modem 120 includes a transmitter for coding and modulating a signal which will be transmitted and a receiver for demodulating and decoding a received signal. An audio processor unit 125 may include a codec including a data codec for processing packet data and an audio codec for processing an audio signal such as a speech signal. The audio processor unit 125 converts a digital audio signal received by the modem 120 into an analog signal and reproduces the analog signal through the audio codec. Also, the audio processor unit 125 converts an analog audio signal generated from a microphone into a digital audio signal through the audio codec and transfers the digital audio signal to the modem 120. The codec may be provided as an independent element or included in a control unit 110.

A memory 130 may comprise a program memory and a data memory. The program memory stores programs for controlling general operations of the mobile terminal. In an exemplary implementation, the program memory also stores programs for changing the operation mode of the mobile terminal in order to automatically enter into a camera mode according to the rotation direction of a folder and the current mode of the mobile terminal, display image data in an upright direction according to the rotation of a camera module, and control the camera mode and the video call mode according to the rotating direction of the folder and the exposure of the camera module. The data memory temporarily stores data generated during implementation of the above programs.

The control unit 110 controls the overall operations of the mobile terminal. The control unit 110 may include the modem 120 and the codec.

When the folder of the mobile terminal is rotated to a first mode (vertical direction) in the camera mode, the control unit 110 recognizes that the rotating direction is to change the current camera mode to a camera stop mode and terminates the camera mode. If the folder is rotated in the same direction in the video call mode, the control unit 110 will recognize that the rotating direction is to change the current video call mode to a video transmission stop mode and will terminate the video call mode.

When the folder of the mobile terminal is rotated to a second mode (horizontal direction), the control unit 110 recognizes that the rotating direction is to change the current operation mode of the mobile terminal to the camera mode. If the folder is rotated in the same direction in the camera stop mode, the control unit 110 will activate the camera mode. If the folder is rotated in the same direction in the video transmission stop mode, the control unit 110 will then activate the video call mode for sending video data.

When a second direction detection signal is output from a folder rotating detector 170, the control unit 110 recognizes that the folder of the mobile terminal is rotated to the second mode (horizontal direction). If the current mode of the mobile terminal is a mode set to be changed to the camera mode, for example, a standby mode, the mobile terminal will be automatically changed to the camera mode to display image data.

When a rotate detection signal for the camera module 140 is output from a camera rotating detector 180 in the camera mode, the control unit 110 rotates the image data in a direction corresponding to the rotation of the camera module 140 and displays the image data in an upright direction.

When the folder rotating detector 170 outputs a first direction detection signal informing that the folder is rotated to the first mode (vertical direction) in the camera mode and then the camera rotating detector 180 outputs a rotate detection signal informing that the camera module 140 is hidden, the control unit 110 changes the current operation mode to the camera stop mode and informs the user of impossibility of photographing.

When the second direction detection signal is output from the folder rotating detector 170 in the camera stop mode, the control unit 110 recognizes that the folder is rotated to the second mode (horizontal direction) and changes the current operation mode again to the camera mode. Alternatively, the control unit 110 may change the operation mode to the camera mode after determining that the camera module 140 is exposed according to a rotate detection signal output from the camera rotating detector 180.

When the folder rotating detector 170 outputs the first direction detection signal in the video call mode and then the camera rotating detector 180 outputs a rotate detection signal informing that the camera module 140 is hidden, the control unit 110 changes the current operation mode to the video transmission stop mode and informs the user of the impossibility of sending video data.

In addition, when the second direction detection signal is output from the folder rotating detector 170 in the video transmission stop mode, the control unit 110 recognizes that the folder is rotated to the second mode (horizontal direction) and changes the current operation mode again to the video transmission mode. Alternatively, the control unit 110 may change the operation mode to the video transmission mode after determining that the camera module 140 is exposed according to a rotate detection signal output from the camera rotating detector 180.

The camera module 140 is used to photograph an object. The camera module 140 includes a camera sensor for converting a photographed optical signal into an electric signal, and a signal processor for converting an analog image signal photographed by the camera sensor into digital data. If the camera sensor is a charge coupled device (CCD) sensor, the signal processor may include a digital signal processor (DSP). The camera sensor and the signal processor may be either integrated into a single element or separated as independent elements.

An image processor unit 150 generates picture data for displaying an image signal output from the camera module 140. The image processor unit 150 processes image signals output from the camera module 140 in frames. Also, the image processor unit 150 adjusts the frame image data to conform to the features, such as size and resolution, which are displayable on a display unit 160, and outputs the adjusted frame image data. The image processor unit 150 includes an image codec, and compresses the frame image data displayed on the display unit 160 in a preset manner or restores the compressed frame image data to the original frame image data. The image codec is selected from a variety of still or moving picture codecs, such as, JPEG codec, MPEG4 codec or Wavelet codec. If the image processor unit 150 has an on screen display (OSD) function, the image processor unit 150 can output OSD data according to the displayed picture size under the control of the control unit 110.

The display unit 160 displays image data output from the image processor unit 150 or user data output from the control unit 110. The display unit 160 may be a liquid crystal display (LCD) including a LCD controller, memory for storing image data and LCD device. When the LCD includes a touch screen, the LCD can serve as an input unit. In an exemplary implementation, the display unit 160 displays a message informing the user of an impossibility of photographing in the camera stop mode or the impossibility of sending video data in the video transmission stop mode.

A key input unit 127 is provided with alphanumeric keys for inputting numbers, characters and function keys for setting up various functions.

The folder rotating detector unit 170 detects the direction in which the folder is rotated and outputs a corresponding direction detection signal to the control unit 110. In an exemplary implementation, the folder of the mobile terminal may be opened in a vertical direction which is parallel to the length of the main housing or rotated in a horizontal direction which is perpendicular to the length of the main housing. When the folder of the mobile terminal is placed in the vertical direction, the folder rotating detector unit 170 outputs the first direction detection signal to the control unit 110. On the other hand, when the folder is rotated in the horizontal direction, the folder rotating detector unit 170 outputs the second direction detection signal to the control unit 110.

The camera rotating detector unit 180 detects the direction in which the camera module 140 is rotated and outputs a corresponding rotate detection signal to the control unit 110. The control unit 110 obtains information regarding a rotating angle of the camera module 140 from the rotate detection signal. According to an exemplary embodiment of the present invention, the camera rotating detector unit 180 outputs a rotate detection signal to the control unit 110 informing the control unit 110 of the rotating angle of the camera module 140, which can be an angle between 0° (upright direction) and 180°.

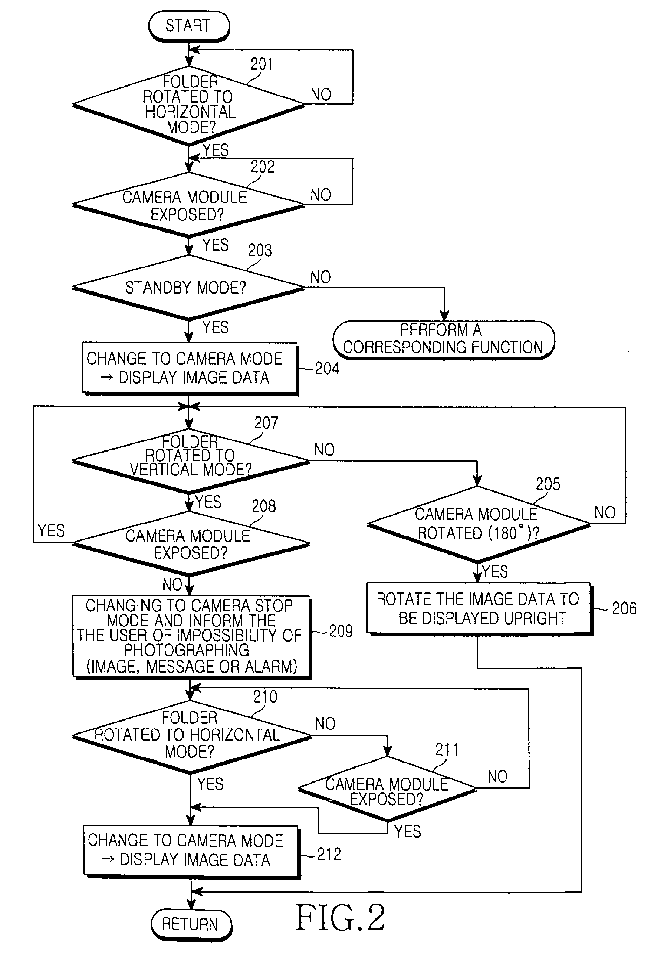

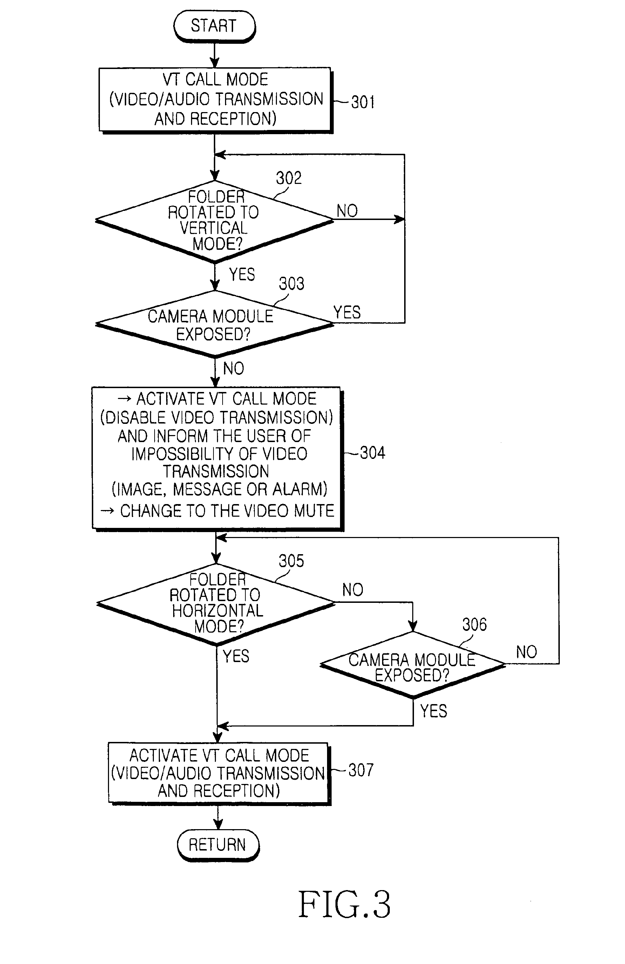

In an exemplary implementation, the operations of the mobile terminal for automatically changing to the camera mode according to the rotating direction of the folder and the current mode of the mobile terminal, displaying image data in an upright direction according to the rotation of the camera module, and controlling the camera mode and the video call mode according to the rotating direction of the folder and the exposure of the camera module will be explained in detail with reference to FIGs. 2 and 3.

FIG. 2 is a flow chart showing a process for changing the operation mode of the mobile terminal from the camera mode to the camera stop mode according to the rotating direction of the folder and the exposure of the camera module in accordance with an exemplary embodiment of the present invention.

A mode change to the camera mode may be, for example, made from the standby mode or at least one of selected various modes and a previously set mode in the mobile terminal.

According to an exemplary embodiment of the present invention, the camera module 140 can be rotated at an angle between 0° and 180°. If the camera module 140 is rotated at an angle greater than 90° in the first (vertical) mode of the folder, the control unit 110 will recognize that the camera module 140 is exposed. If the camera module 140 is rotated at an angle smaller than 90°, the control unit 110 will recognize that the camera module 140 is hidden by the folder.

An exemplary embodiment of the present invention will be explained in detail with reference to FIGs. 1 and 2.

Referring to FIG. 2, when the folder of the mobile terminal is rotated to the second horizontal mode from the first vertical mode, the folder rotating detector unit 170 detects the rotation in step 201 and outputs a second direction detection signal to the control unit 110.

Based on the second direction detection signal received from the folder rotating detector unit 170, the control unit 110 determines whether the camera module 140 is exposed. For example, the control unit 110 determines whether the camera module 140 is rotated at an angle greater than 90° based on rotating angle information included in the rotate detection signal. If the camera module 140 is rotated at an angle greater than 90°, the control unit 110 will recognize that the camera module 140 is exposed in step 202, and determine the current operation mode of the mobile terminal.

If the current mode of the mobile terminal is the standby mode, which a mode change to the camera mode may be made, the control unit 110 will detect the current mode in step 203 and proceed to step 204 in order to automatically change the current mode to the camera mode. The camera mode in step 204 is a preview mode which displays image data input through the camera module 140. The camera mode may be changed to a video mode for taking a motion picture according to the user's selection.

Thus, the operation mode of the mobile terminal may be automatically changed to the camera mode with the rotation of the folder. The current mode determination is included to change to the camera mode from a preset or desired mode.

When a rotate detection signal for the camera module 140 is output from the camera rotating detector unit 180 in the camera mode (step 204), the control unit 110 detects the signal in step 205 and proceeds to step 206 in order to rotate the image data according to the rotate detection signal and display the image data in an upright direction on the display unit 160. If the rotate detection signal from the camera rotating detector unit 180 indicates a 180° rotation of the camera module 140, the control unit 110 will control the image processor unit 150 to rotate the image data output from the camera module 140 180° in order to be displayed in an upright direction on the display unit 160.

Accordingly, image data is automatically rotated according to the rotation of the camera module 140 and displayed in an upright direction without any key pressing in the camera mode.

When the first direction detection signal is output from the folder rotating detector unit 170 in the camera mode (step 204), the control unit 110 detects the signal in step 207 and receives a rotate detection signal from the camera rotating detector unit 180. The control unit 110 extracts a rotating angle of the camera module 140 from the rotate detection signal received from the camera rotating detector unit 180. If the rotating angle of the camera module 140 is greater than 90°, the control unit 110 will recognize that the camera module 140 is exposed in step 208 and will maintain the camera mode of step 204.

On the other hand, if the rotating angle extracted from the rotate detection signal is smaller than 90°, the control unit 110 will recognize that the camera module 140 is hidden by the folder in step 208 and will then proceed to step 209 in order to activate the camera stop mode.

In step 209, the control unit 110 activates the camera stop mode and informs the user that it is impossible to photograph because of the hidden camera module. At this time, the control unit 110 may display a message and/or an image (icon) or output an alarm to inform the user of the impossibility of photographing.

If the camera mode in step 204 is a preview mode, the control unit 110 will activate the camera stop mode and inform the user of the impossibility of photographing simultaneously in step 209. If the camera mode in step 204 is a motion picture taking mode, the control unit 110 will temporarily stop the picture-taking process and inform the user of the impossibility of picture-taking in step 209. Alternatively, the control unit 100 may first store a presently taken motion picture and then activate a picture-taking stop mode and inform the user of the impossibility of picture-taking.

When the folder of the mobile terminal is rotated to the horizontal mode in the camera stop mode (step 209), the folder rotating detector unit 170 detects the rotation in step 210 and outputs the second direction detection signal to the control unit 110. Upon receiving the second direction detection signal from the folder rotating detector unit 170, the control unit 110 recognizes that the camera module is exposed due to the rotation of the folder to the horizontal mode. Then the control unit 110 changes the current operation mode again to the camera mode and displays image data in step 212.

Alternatively, when a rotate detection signal informing that the camera module 140 is rotated at an angle greater than 90° is received from the camera rotating detector unit 180 in the camera stop mode (step 209), the control unit 110 recognizes that the camera module 140 is exposed in step 211 and proceeds to step 212 in order to activate the camera mode again and display image data. At this time, the control unit 110 rotates the image data at an angle corresponding to the rotating angle of the camera module 140 and displays the image data in an upright direction on the display unit 160.

If the camera stop mode in step 209 is changed from the preview mode, the control unit 110 will activate the preview mode again and display the image data inputted from the camera module 140 on the display unit 160. If the camera stop mode in step 209 is changed from the motion picture taking mode, the control unit 110 will activate the motion picture taking mode again to allow the user to resume the picture-taking process temporarily stopped in step 212 or start a new picture-taking process.

Accordingly, a useless black image may be prevented from being displayed or taken when the camera module is hidden by the folder.

FIG. 3 is a flow chart showing a process for changing the operation mode of a mobile terminal from a video call mode to a video transmission stop mode according to the rotating direction of a folder and the exposure of a camera module in accordance with an exemplary embodiment of the present invention. According to an exemplary embodiment of the present invention, the camera module 140 can be rotated at an angle between 0° and 180°. If the camera module 140 is rotated at an angle greater than 90° in the first (vertical) mode of the folder, the control unit 110 will recognize that the camera module 140 is exposed. If the camera module 140 is rotated at an angle smaller than 90°, the control unit 110 will recognize that the camera module 140 is hidden by the folder.

An exemplary embodiment of the present invention will be explained in detail with reference to FIGs. 1 and 3.

Referring to FIG. 3, when the folder of the mobile terminal is rotated to the second horizontal mode, a video telephone (VT) mode or a video call mode can be implemented in step 301. When the first direction signal is output from the folder rotating detector unit 170, the control unit 110 detects the signal in step 302 and receives a rotate detection signal from the camera rotating detector unit 180. The control unit 110 extracts a rotating angle of the camera module 140 from the rotate detection signal received from the camera rotating detector unit 180. If the rotating angle of the camera module 140 is greater than 90°, the control unit 110 will recognize that the camera module 140 is exposed in step 303 and will maintain the video call mode of step 301.

On the other hand, if the rotating angle extracted from the rotate detection signal is smaller than 90°, the control unit 110 will recognize that the camera module 140 is hidden by the folder in step 303 and will then proceed to step 304 in order to activate the video transmission stop mode.

In step 304, the control unit 110 activates the video transmission stop mode and informs the user that it is impossible to send video data because of the hidden camera module. At this time, the control unit 110 may display a message and/or an image (icon) or output an alarm to inform the user of the impossibility of video data transmission. In the video transmission stop mode, only audio data can be received and transmitted. Also, video data can only be received in that mode.

Alternatively, in step 304, the control unit 110 automatically changes the mode of the mobile terminal to video mute which can be changed to the video transmission stop mode. Once the change is made to the video mute mode, the control unit 110 displays a still image or a motion picture indicating the video mute mode, or a preset still image or motion picture on the display unit 160. At the same time, the control unit 110 sends the still image or the motion picture to the video call partner's terminal.

When the folder of the mobile terminal is rotated to the horizontal mode in the video transmission stop mode (step 304), the folder rotating detector unit 170 detects the rotation in step 305 and outputs the second direction detection signal to the control unit 110. Once the second direction detection signal from the folder rotating detector unit 170 is received, the control unit 110 recognizes that the camera module is exposed due to the rotation of the folder and thus proceeds to step 307 in order to activate the video call mode that enables transmission of video data.

Alternatively, when a rotate detection signal informing that the camera module 140 is rotated at an angle greater than 90° is received from the camera rotating detector unit 180 in the video transmission stop mode (step 304), the control unit 110 recognizes that the camera module 140 is exposed in step 306 and proceeds to step 307 in order to activate the video call mode again.

Accordingly, a useless black image may be prevented from being displayed or sent to the video call partner's terminal, when the camera module is hidden by the folder.

As described above, exemplary embodiments the present invention provide a method for controlling the operation mode of a mobile terminal, which can prevent a useless black image from being displayed or taken in the camera mode or the video call mode, when the camera module is hidden due to the rotation of the folder. The mobile terminal automatically changes the operation mode to the camera mode according to the rotating direction of the folder and the current mode. In addition, image data displayed on the display unit is automatically rotated according to the rotation of the camera module, thereby enabling the user to view the image data in an upright direction without any direct key input.

While the invention has been shown and described with reference to certain exemplary embodiments thereof, it will be understood by those skilled in the art that various changes in form and details may be made therein without departing from the spirit and scope of the invention as defined by the appended claim.

## Claims

1. A method for changing operation mode of a mobile terminal, the method comprising:
detecting a rotation direction of a folder of a mobile terminal;
determining a current mode of the mobile terminal, if the rotation direction of the folder comprises an indication of a camera mode; and
changing the current mode of the mobile terminal to the camera mode in the rotating direction of the folder, if the current mode comprises an option to change to the camera mode.

2. The method according to claim 1, further comprising:
determining whether a camera module is exposed, if the rotation direction of the folder comprises the indication of the camera mode;
determining the current mode of the mobile terminal, if the camera module is exposed; and
changing the current mode of the mobile terminal to the camera mode in the rotating direction of the folder, if the current mode comprises an option to change to the camera mode.

3. The method according to claim 1, wherein a standby mode comprises the option to change to the camera mode.

4. A method for controlling a camera mode in a mobile terminal comprising:
detecting a rotation direction of a folder of a mobile terminal;
determining whether a camera module is exposed, if the rotation direction of the folder comprises an indication of a camera stop mode;
entering into the camera stop mode if the camera module is not exposed, thereby terminating the camera mode; and
maintaining the camera mode, if the camera module is exposed.

5. The method according to claim 4, wherein entering into a camera stop mode comprises a rotating of folder in a direction to hide the camera module.

6. The method according to claim 4, further comprising:
determining whether the camera module is rotated in the camera mode; and
rotating image data in a direction and an angle corresponding to the rotation of the camera module to display the image data in an upright direction, if the camera module comprises the rotation in the camera mode.

7. The method according to claim 4, wherein the entering into the camera stop mode comprises:
terminating the camera mode and outputting information comprising an indication of impossibility of photographing, if the camera mode comprises a preview mode; and
temporarily stopping at least one of a picture-taking process and storing presently taken image data process, terminating the camera mode and outputting information comprising an indication of impossibility of picture-taking, if the camera mode comprises a motion picture taking mode.

8. The method according to claim 4, wherein the maintaining of the camera mode comprises:
determining whether the exposed camera module is rotated; and
rotating image data in a direction and an angle corresponding to the rotation of the camera module to display the image data in an upright direction, if the camera module is rotated from an upright position.

9. The method according to claim 4, further comprising:
detecting a rotation direction of the folder; and
changing to the camera mode, if the rotation direction of the folder comprises a rotation direction to enter into a camera mode.

10. The method according to claim 4, further comprising:
determining whether the camera module is exposed in the camera stop mode; and
changing to the camera mode, if the camera module is exposed.

11. The method according to claim 10, further comprising:
determining whether the exposed camera module is rotated; and
rotating image data in a direction and an angle corresponding to the rotation of the camera module to display the image data in an upright direction, if the camera module is rotated from an upright position.

12. The method according to claim 6, wherein the upright position of the camera module comprises a position where the camera module is viewed upright.

13. The method according to claim 8, wherein the upright position of the camera module comprises a position where the camera module is viewed upright.

14. The method according to claim 11, wherein the upright position of the camera module comprises a position where the camera module is viewed upright.

15. The method according to claim 6, wherein the image data output from the camera module is rotated 180° and displayed when the camera module is rotated 180° from the upright position.

16. The method according to claim 8, wherein the image data output from the camera module is rotated 180° and displayed when the camera module is rotated 180° from the upright position

17. The method according to claim 11, wherein the image data output from the camera module is rotated 180° and displayed when the camera module is rotated 180° from the upright position

18. The method according to claim 9, wherein the changing to the camera mode comprises:
entering into the camera mode for displaying image data, if the camera stop mode has been changed from a preview mode; and
entering into the camera mode for resuming a temporarily stopped picture-taking process or starting a new picture-taking process, if the camera stop mode has been changed from a motion picture taking mode.

19. The method according to claim 10, wherein the changing to the camera mode comprises:
entering into the camera mode for displaying image data, if the camera stop mode has been changed from a preview mode; and
entering into the camera mode for resuming a temporarily stopped picture-taking process or starting a new picture-taking process, if the camera stop mode has been changed from a motion picture taking mode.

20. A method for controlling a camera mode in a mobile terminal comprising:
detecting a rotation direction of a folder of a mobile terminal;
determining whether a camera module is exposed, if the rotation direction of the folder comprises an indication to hide the camera module;
entering into a camera stop mode to output information comprising an indication of impossibility of photographing, if the camera module is not exposed;
entering into the camera mode, if the rotation direction of the folder comprises a direction to expose the camera module in the camera stop mode; and
entering into the camera mode, when the camera module is rotated and exposed in the camera stop mode.

21. The method according to claim 20, further comprising the step of maintaining the camera mode, if the camera module is rotated and exposed.

22. A method for controlling a camera mode in a mobile terminal comprising:
determining whether a camera module is rotated in the camera mode; and
rotating image data in a direction and an angle corresponding to the rotation of the camera module to display the image data in an upright direction, if the camera module is rotated from an upright position.

23. The method according to claim 22, wherein the image data output from the camera module is rotated 180° and displayed when the camera module is rotated 180° from the upright position.

24. A method for controlling a camera mode in a mobile terminal comprising:
determining a current mode of the mobile terminal, when a rotation direction of a folder of the mobile terminal comprises an indication of a camera mode;
entering into the camera mode in the rotating direction of the folder, if the current mode comprises an option to change to the camera mode;
detecting a rotation direction of the folder, when the folder is rotated again in the camera mode;
determining whether a camera module is exposed, if the rotation direction of the folder comprises an indication to hide the camera module;
maintaining the camera mode, if the camera module is exposed;
changing the current mode to a camera stop mode to output information comprising an indication of impossibility of photographing, if the camera module is not exposed;
changing the current mode to the camera mode, if the folder is rotated to expose the camera module in the camera stop mode; and
entering into the camera mode, when the camera module is rotated and exposed in the camera stop mode.

25. A method for controlling a video call mode in a mobile terminal comprising:
detecting a rotation direction of a folder of the mobile terminal, when the folder is rotated in the video call mode;
determining whether a camera module is exposed, if the rotation direction of the folder comprises an indication of a video transmission stop mode; and
changing to the video transmission stop mode, if the camera module is not exposed.

26. The method according to claim 25, wherein the rotation direction comprising the indication of the video transmission stop mode comprises rotation in a direction in which the folder is rotated to hide the camera module.

27. The method according to claim 25, wherein the video transmission stop mode comprises disabling transmission of video data and enabling a video call through transmission and reception of audio data.

28. The method according to claim 25, wherein the video transmission stop mode comprises disabling transmission of video data and enabling a video call through reception of video data and transmission and reception of audio data.

29. The method according to claim 25, further comprising changing to the video transmission stop mode and outputting information comprising an indication of impossibility of video data transmission, if the camera module is not exposed.

30. The method according to claim 25, further comprising automatically changing to a video mute mode for stopping video transmission, if the camera module is not exposed.

31. The method according to claim 25, further comprising:
detecting a rotation direction of the folder, when the folder is rotated in the video transmission stop mode; and
changing to the video call mode that enables video transmission, if the folder is rotated to enter into the video call mode.

32. The method according to claim 25, further comprising:
determining whether the camera module is exposed in the video transmission stop mode; and
changing to the video call mode that enables video transmission, if the camera module is exposed.

33. A method for controlling a video call mode in a mobile terminal comprising:
detecting a rotation direction of a folder of the mobile terminal;
determining whether a camera module is exposed, if the rotation direction of the folder comprises a direction to hide the camera module;
changing to at least one of a video transmission stop mode to output information comprising an indication of impossibility of sending video data and
a video mute mode for stopping video transmission, if the camera module is not exposed;
changing to the video call mode allowing the video transmission, when the rotation direction of the folder comprises a direction to enter into a video transmission mode in the video transmission stop mode; and
entering into the video call mode when the camera module is exposed in the video transmission stop mode.

34. The method according to claim 32, wherein the video transmission stop mode disables transmission of video data and enables a video call through transmission and reception of audio data.

35. The method according to claim 32, wherein the video transmission stop mode disables transmission of video data and enables a video call through reception of video data and transmission and reception of audio data.

36. A mobile terminal, comprising:
a camera module operable in a camera mode of a mobile terminal;
a folder;
a folder rotating detector unit detecting a rotation direction of the folder; and
a controller unit;
wherein the controller unit determines a current mode of a mobile terminal if the rotation direction comprises an indication of a camera mode, and the current mode of the mobile terminal is changed to the camera mode in the rotation direction of the folder, if the current mode comprises an option to change to the camera mode.
